# EUROPÄISCHE PATENTSCHRIFT

(11) **EP 0 841 126 B1**
(45) Veröffentlichungstag und Bekanntmachung des Hinweises auf die Patenterteilung: **19.03.2003**
(21) Anmeldenummer: 97810791.0
(22) Anmeldetag: 23.10.1997
(51) Int. Cl.: B25F 5/00, F16D 59/02, B24B 23/00, B24B 55/00, B25D 9/26, B25D 16/00

(54) **Motorisch betriebenes Handgerät mit einer Sicherheitseinrichtung für den Fall einer Werkzeugblockage**
Motor-driven hand tool with safety device in case of jammed tool
Appareil à main entraîné par moteur avec un dispositif de sécurité dans la cas d'outil de blocage

(30) Priorität: 11.11.1996 DE 19646382
(43) Veröffentlichungstag der Anmeldung: 13.05.1998
(73) Patentinhaber: HILTI Aktiengesellschaft, 9494 Schaan (LI)
(72) Erfinder: Stöck, Maximilian, 9478 Azmoos (CH); Kristen, Ferdinand, 82110 Germering (DE); Thiel, Arno, 80687 München (DE)
(74) Vertreter: Wildi, Roland

(56) Entgegenhaltungen:
- EP-A- 0 486 843
- WO-A-88/06508
- DE-A- 3 919 427
- GB-A- 2 306 356
- US-A- 5 401 124

## Beschreibung

Die Erfindung betrifft ein motorisch betriebenes Handgerät, insbesondere ein Bohrgerät, mit einer aus einem Gehäuse ragenden Drehspindel zur Übertragung einer Drehbewegung von einem Antriebsmotor auf ein Werkzeug und einer Sicherheitseinrichtung, die bei plötzlich blockierendem Werkzeug ein Auslenken des Gehäuses des Handgeräts um die Achse der Drehspindel unterbindet, wobei die Sicherheitseinrichtung mittels einer Detektionseinrichtung für den Blockierfall des Werkzeugs aktivierbar ist.

Handgeräte der gattungsgemässen Art, wie beispielsweise Bohrgeräte oder Trennschleifgeräte, werden vor allem im professionellen Handwerkerbereich, jedoch in steigendem Masse auch von Heimwerkern angewendet. Im Betrieb der Handgeräte besteht die Gefahr, dass das in der Drehspindel des Gerätes gehalterte Werkzeug durch fehlerhafte Bedienung des Anwenders oder beispielsweise bei Eisentreffern beim Erstellen von Bohrungen in armiertem Beton verklemmt. Durch die plötzliche Blockierung der Drehspindel treten hohe Reaktionsdrehmomente auf, die zu einem Auslenken des Gehäuses um die Achse der Drehspindel führen. Die Bedienperson ist in der Regel nicht auf eine solche Reaktion gefasst und wird durch das Auslenken des Handgeräts überrascht. Dadurch kann ihr das Handgerät aus den Händen gerissen werden oder die Bedienperson kann beim Arbeiten in exponierten Lagen, wie beispielsweise auf Gerüsten oder auf Leitern, aus dem Gleichgewicht und in gefährliche Situationen gebracht werden.

Um solche Situationen zu vermeiden, sind in der Vergangenheit verschiedene Massnahmen vorgeschlagen worden, bei denen das Prinzip einer trägen Masse angewendet wird, um beim Auslenken des Handgeräts eine drehfeste Kopplung zwischen dem Gehäuse und dem blockierenden Werkzeug zu gewährleisten. Ein Beispiel für eine derartige Lösung ist in der DE-A-43 00 021 zu finden. Insbesondere ist bei dem dort beschriebenen Handgerät ein mit dem Gehäuse verbundener mechanischer Riegel zur formschlüssigen Blockierung der Drehspindel vorgeschlagen, der beim plötzlichen Auslenken des Handgeräts über eine träge Masse aktiviert wird. Die auf dem Prinzip der trägen Masse beruhenden Sicherheitseinrichtungen werden erst durch das ruckartige Auslenken des Gehäuses aktiviert. Daher kann es bei Handgeräten, die mit einer derartigen rein mechanisch wirkenden Sicherheitseinrichtung ausgestattet sind, immer noch zu relativ grossen Auslenkwinkeln kommen.

Aus der EP-B-0 486 843 ist ein Handgerät bekannt, bei dem ein im Antriebsstrang für die Drehspindel mit Schlingenfederkupplungen ausgestattetes Handgerät eine Sicherheitseinrichtung aufweist, die mit einer Detektoreinrichtung für den Blockierfall des Werkzeugs zusammenwirkt. Bei der Sicherheitseinrichtung handelt es sich um eine weitere Schlingenfederkupplung, die bei Detektion eines Blockierfalls elektronisch aktivierbar ist und über eine Bremsfeder die Rotation des Gehäuses um eine Antriebswelle unterbinden soll. Zwar wird bei diesem bekannten Handgerät die Sicherheitseinrichtung nicht mehr über eine relativ langsam reagierende träge Masse aktiviert. Vielmehr wird nach dem Erkennen eines Blockierfalls ein elektronisches Signal generiert, aufgrund dessen eine Magnetspule bestromt wird, die Bestanteil einer elektromagnetischen Bremse ist. Die elektromagnetische Bremse wirkt mit einem Schaltgehäuse zusammen, das schliesslich zu einem Zusammenziehen der Schlingenfederkupplung und zu einer drehfesten Kopplung zwischen Antriebswelle und Gehäuse führt. Diese vorgeschlagene Sicherheitseinrichtung ist relativ aufwendig in seiner Konstruktion und ist nur für Handgeräte konzipiert, die im Antriebsstrang der Drehspindel mit Schlingenfederkupplungen ausgestattet sind. Die Schlingenfeder ist im normalen Betriebszustand im Abstand von der Antriebswelle angeordnet. Im Blockierfall muss zunächst dieser Abstand überbrückt werden, um das Gehäuse und die Antriebswelle drehfest zu koppeln. Dies führt zu einer gewissen Ansprechverzögerung der Sicherheitseinrichtung, was für die Bedienperson unakzeptable Auslenkwinkel des Handgeräts zur Folge haben kann.

WO 88/06508 offenbart ein motorisch betriebenes Handgerät, insbesondere Bohrgerät, mit einer aus einem Gehäuse ragenden Drehspindel zur Übertragung einer Drehbewegung von einem Antriebsmotor auf ein Werkzeug und eine Sicherheitseinrichtung , die bei plötzlich blockierendem Werkzeug ein Auslenken des Gehäuses des Handgeräts um die Achse der Drehspindel unterbindet, wobei die Sicherheitseinrichtung mittels einer Detektionseinrichtung für den Blockierfall des Werkzeugs aktivierbar ist, wobei im Antriebsstrang für die Drehspindel eine Überlastrutschkupplung vorgesehen ist und die Sicherheitseinrichtung in Serie zur Überlastrutschkupplung im Antriebsstrang zwischen der Überlastrutschkupplung und der Drehspindel angeordnet ist und bei Aktivierung das Gehäuse und den drehspindelseitigen Antriebsstrang drehfest miteinander koppelt.

Aufgabe der vorliegenden Erfindung ist es daher, ein Handgerät zu schaffen, das mit einer Sicherheitseinrichtung ausgestattet ist, die für die Bedienperson unakzeptable Auslenkwinkel des Handgeräts im Blockierfall verhindert. Die Sicherheitseinrichtung soll ein sehr schnelles Ansprechverhalten aufweisen und einfach in der Konstruktion sein. Insbesondere soll ein Handgerät mit einer Sicherheitseinrichtung geschaffen werden, die in Verbindung mit einer Detektionseinrichtungen für ein frühzeitiges Erkennen des Blockierfalls einsetzbar und durch diese aktivierbar ist. Darüber hinaus soll der Antriebsmotor im Blockierfall des Werkzeugs geschont werden. Zudem soll das Handgerät auch für Fälle, in denen aufgrund örtlicher Gegebenheiten nur eine beschränkte Auslenkung um kleine Schwenkwinkel möglich ist, beispielsweise bei Bohrarbeiten in Ecken, bei denen das Handgerät an der Wand anliegt, für den Anwender ausreichende Sicherheit bieten.

Die Lösung dieser Aufgaben besteht in einem motorisch betriebenen Handgerät, bei dem die Sicherheitseinrichtung gemäss dem kennzeichnenden Abschnitt des Patentanspruchs 1 ausgebildet ist. Das erfindungsgemässe, motorisch betriebene Handgerät, insbesondere ein Bohrgerät, ist mit einer aus einem Gehäuse ragenden Drehspindel zur Übertragung einer Drehbewegung von einem Antriebsmotor auf ein Werkzeug und einer Sicherheitseinrichtung ausgestattet, die bei plötzlich blockierendem Werkzeug ein Auslenken des Gehäuses des Handgeräts um die Achse der Drehspindel unterbindet. Die Sicherheitseinrichtung ist mittels einer Detektionseinrichtung für den Blockierfall des Werkzeugs aktivierbar. Im Antriebsstrang für die Drehspindel ist eine Überlastrutschkupplung vorgesehen. Die Sicherheitseinrichtung ist in Serie zur Überlastrutschkupplung im Antriebsstrang zwischen der Überlastrutschkupplung und der Drehspindel angeordnet und koppelt bei Aktivierung das Gehäuse und den drehspindelseitigen Antriebsstrang drehfest miteinander.

Die erfindungsgemässe Anordnung der Sicherheitseinrichtung im drehspindelseitigen Antriebsstrang, nach der Überlastrutschkupplung und vor der Drehspindel, weist den Vorteil auf, dass in diesem Bereich des Antriebsstrangs aufgrund der getriebeartigen Übersetzungsverhälnisse nur mehr verhältnismässig geringe Drehmomente auftreten, die im Blockierfall der Drehspindel von der Sicherheitseinrichtung aufgenommen und beherrscht werden müssen. Die Sicherheitseinrichtung ist in einem Bereich des Antriebsstrangs angeordnet, der verhältnismässig kleine Dimensionen aufweist. Daraus ergeben sich auch für die Sicherheitseinrichtung verhältnismässig kleine Wegstrecken, die zu überbrücken sind, um bei Detektion des Werkzeugblockierens das Gehäuse und den drehspindelseitigen Antriebsstrang drehfest zu koppeln. Die Überlastrutschkupplung dient einerseits dem Schutz des Antriebsmotors, insbesondere im Blockierfall des Werkzeugs. Die Anordnung der Überlastrutschkupplung im Antriebsstrang für die Drehspindel bietet zudem dem Anwender zusätzlichen Schutz, beispielsweise wenn aufgrund örtlicher Gegebenheiten das Handgerät im Blockierfall nicht auslenken kann und die Detektionseinrichtung, welche den Blockierfall vielfach aus der Messung von Drehbeschleunigungen ermittelt, nicht anspricht. In diesem Fall erhält die Sicherheitseinrichtung kein Steuersignal und wird daher auch nicht aktiviert. Dafür spricht bei einem bestimmten Drehmoment die Überlastrutschkupplung an und trennt den Antriebsstrang zwischen dem Antriebsmotor und der Drehspindel.

Um eine grösstmögliche Sicherheit für den Anwender zu bieten und ein zuverlässiges Ansprechen der Sicherheitseinrichtung im Blockierfall des Werkzeugs zu gewährleisten, ist die Sicherheitseinrichtung mit Vorteil elektromechanisch aktivierbar.

Indem die Sicherheitseinrichtung ein federbelastetes Schubelement umfasst, das bei ausgeschaltetem Handgerät das Gehäuse und den Antriebsstrang drehfest miteinander koppelt, ist im Versagensfall des Handgeräts, der zu einem plötzlichen Abschalten des Drehantriebs für die Drehspindel führt, eine Aktivierung der Sicherheitseinrichtung sichergestellt.

In einer vorteilhaften Ausführungsvariante der Erfindung ist das federbelastete Schubelement im Magnetfeld einer Magnetspule angeordnet, die im Betrieb bestromt ist und bei Detektion des Blockierfalls stromlos schaltbar ist, wodurch die Sicherheitseinrichtung aktivierbar ist. In diesem Fall reduziert sich die Aktivierung der Sicherheitseinrichtung auf die automatische Betätigung einer Schaltanordnung für die Bestromung der Magnetspule. Dabei wird das im Magnetfeld gegen die Federkraft zurückgehaltene Schubelement automatisch freigegeben, um die drehfeste Kopplung des Gehäuses und des drehspindelseitigen Antriebsstrangs zu bewirken. Auch im Fall eines Stromausfalls wird durch die gewählte Anordnung automatisch die Sicherheitseinrichtung aktiviert.

In einer Ausführungsvariante des erfindungsgemässen Handgeräts ist die Sicherheitseinrichtung zur Herstellung einer formschlüssigen Verbindung zwischen dem Gehäuse und dem Antriebsstrang ausgebildet. Dazu umfasst sie wenigstens zwei, im Aktiverungsfall miteinander formschlüssig zusammenwirkende Verriegelungselemente, von denen eines mit dem Gehäuse und das andere mit dem Antriebsstrang verbunden ist. Wegen der getriebeartigen Übersetzungsverhältnisse sind die von den formschlüssig zusammenwirkenden Verriegelungselementen aufzunehmenden Drehmomente relativ klein. Daher können die Verriegelungselemente relativ leicht konstruiert werden, was der Ansprechgeschwindigkeit der Sicherheitseinrichtung entgegenkommt. Beispielsweise bildet das Schubelement das eine Verriegelungselement, das im Blockierfall des Werkzeugs in eine Verzahnung eines Wellenstücks im drehspindelseitigen Antriebsstrang eingreift und auf diese Weise das Gehäuse und den drehspindelseititgen Antriebsstrang koppelt. Eine Überlastung des Antriebsmotors wird dabei durch die Überlastrutschkupplung verhindert.

In einer alternativen Ausführungsvariante des erfindungsgemässen Handgeräts ist die Sicherheitseinrichtung zur Herstellung einer reibschlüssigen Verbindung zwischen dem Gehäuse und dem Antriebsstrang ausgebildet. Vorzugsweise weist sie dazu wenigstens einen Bremsschuh auf, der dem Gehäuse zugehörig ist und im Blockierfall des Werkzeugs reibschlüssig mit einer Welle des drehspindelseitigen Antriebsstrangs zusammenwirkt. Das Ansprechverhalten der auf Reibschluss basierenden Sicherheitseinrichtung hängt im wesentlichen von der Federkraft ab, mit der das Schubelement, auf dem der Bremsschuh vorzugsweise angeordnet ist, in Richtung der abzubremsenden Welle vorgespannt ist. Bei dieser Ausführungsvariante des erfindungsgemässen Handgeräts kann vorgesehen sein, die Vorspannkraft des Schubelements je nach Anwendungsfall zu verändern. Vorzugsweise ist der Bremsschuh auswechselbar. Durch die Wahl eines Bremsschuhs mit geeigneten Reibeigenschaften kann das Ansprechverhalten der Sicherheitseinrichtung beeinflusst werden.

In einer vorteilhaften Variante der Erfindung ist die Krümmung der Reibfläche des Bremsschuhs der Krümmung der Oberfläche der abzubremsenden Welle angeglichen. Dadurch ergibt sich im Aktivierungsfall der Sicherheitseinrichtung eine flächige Anlage zwischen der Bremsfläche des Bremsschuhs und der Oberfläche der Welle, wodurch die Reibkraft erhöht wird.

Im folgenden wird die Erfindung mit allen ihr als wesentlich zugehörigen Einzelheiten unter Bezugnahme auf die in den schematischen Zeichnungen dargestellten Ausführungsbeispiele näher erläutert. Es zeigen:
- Fig. 1: eine Blockdarstellung eines erfindungsgemässen Handgeräts am Beispiel eines Bohrgeräts;
- Fig. 2: ein teilweise aufgeschnittenes Handgerät mit einer ersten Ausführungsvariante der Sicherheitseinrichtung;
- Fig. 3: die Sicherheitseinrichtung aus Fig. 2 im Schnitt gemäss Schnittlinie III; und
- Fig. 4: ein teilweise aufgeschnittenes Handgerät mit einer zweiten Ausführungsvariante der Sicherheitseinrichtung.

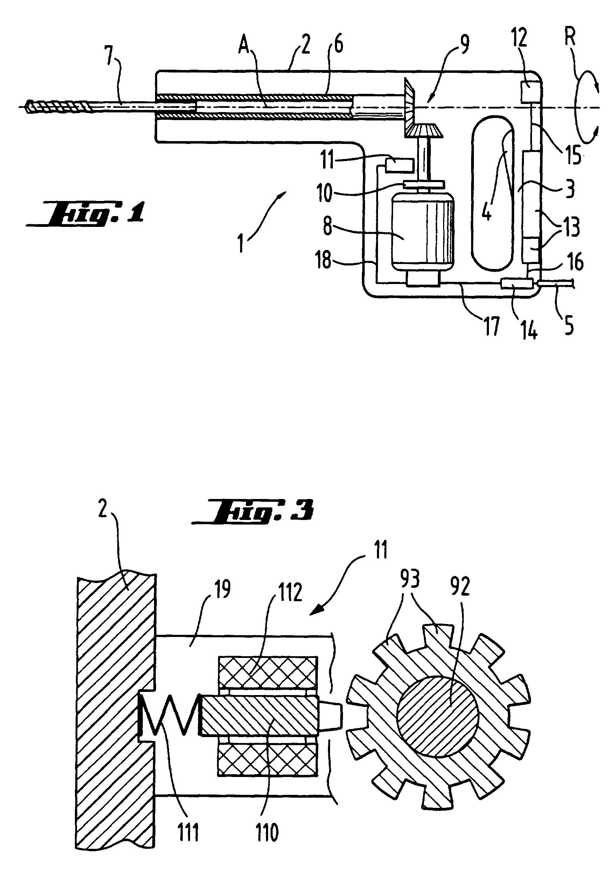

In der schematischen Blockdarstellung in Fig. 1 ist ein erfindungsgemäss ausgestattetes Handgerät gesamthaft mit dem Bezugszeichen 1 versehen. Bei dem beispielseweise dargestellten Handgerät 1 handelt es sich um ein Bohrgerät. Bohrgeräte der gattungsgemässen Art weisen üblicherweise ein Schlagwerk auf, mit dem während des Betriebs axiale Schläge auf das Werkzeug ausgübt werden. Aus Gründen der Übersichtlichkeit wird in der Blockdarstellung der Fig. 1 auf eine Darstellung des Schlagwerks verzichtet. Das Handgerät weist ein üblicherweise aus Kunststoff bestehendes Gehäuse 2 auf, an dem ein Griffteil 3 befestigt ist. Die Energieversorgung des Handgeräts erfolgt über ein unter 5 angedeutetes Anschlusskabel. Ein im Griffteil vorgesehener Schalter 4 dient der Inbetriebnahme des Handgeräts 1. Innerhalb des Gehäuses 2 ist eine Drehspindel 6 angeordnet, die an der dem Griffteil 3 gegenüberliegenden Seite aus dem Gehäuse 2 ragt und zur Aufnahme eines von der Drehspindel 6 antreibbaren Werkzeugs 7, beispielsweise eines Bohrwerkzeugs, dient. Die Drehspindel 6 ist über einen Antriebsstrang 9 bzw. ein Getriebe mit einem Antriebsmotor 8 verbunden. Der Antriebsstrang 9 sorgt für eine Übertragung der Drehbewegung des Antriebsmotors 8 auf die Drehspindel 6 mit dem Werkzeug 7. Die Rotation der Drehspindel um die Achse A ist in Fig. 1 durch den Doppelpfeil R symbolisiert, um den bei vielen Handgeräten wahlweise möglichen Rechts- oder Linkslauf der Drehspindel 6 anzudeuten.

Zur rechtzeitigen Erfassung von den Anwender gefährdenden Situationen durch Werkzeugblockieren ist das Handgerät mit einer Detektionseinrichtung 12 ausgestattet. Die Detektionseinrichtung 12 umfasst Sensoren, die ein Auslenken des Handgerätes 1 um die Drehachse A der Drehspindel 6 detektieren. Die erfassten Messwerte werden digitalisiert und an eine Auswerteeinheit 13 mit Speichereinheiten und Recheneinheiten, beispielsweise einem Mikroprozessor, weitergeleitet. In der Auswerteeinheit 13 werden die Messwerte in die Drehbewegung charakterisierende Kenngrössen, wie beispielsweise Drehbeschleunigung, Drehgeschwindigkeit und Auslenkwinkel, umgeformt. Aus diesen Kenngrössen wird nach vorgebbaren Kriterien auf einen zu erwartenden Gefährdungsgrad des Anwenders geschlossen, beispielsweise indem der zu erwartende Auslenkwinkel oder eine Unfallwahrscheinlichkeit bestimmt wird. Die in der Auswerteeinheit 13 bestimmten Grössen werden einer Vergleichseinheit 14 zugeführt, die bei Überschreiten eines, vorzugsweise vorgebbaren, Schwellenwertes ein Signal erzeugt. Dieses Signal wird einerseits an den Antriebsmotor 8 weitergeleitet, um diesen bei erkanntem, zu hohem Gefährdungsgrad des Anwenders automatisch abzuschalten. Andererseits aktiviert das von der Vergleichseinheit generierte Signal eine Sicherheitseinrichtung 11, die im Antriebsstrang 9 für die Drehspindel 6 vorgesehen ist. Die Sicherheitseinrichtung 11 wirkt somit mit der Detektionseinrichtung 12 zusammen, indem sie in Abhängigkeit der von deren Sensoren erfassten und von der Auswerteeinheit 13 verarbeiteten Messwerte aktiviert wird. Mit Hilfe der Sicherheitseinrichtung 11 wird die Auslenkbewegung des Gehäuses 2 um die Drehachse A der Drehspindel 6 unterdrückt, indem das Gehäuse 2 und die durch das Werkzeug 7 blockierte Drehspindel 6 drehfest miteinander gekoppelt werden.

Die Sicherheitseinrichtung 11 ist zwischen einer im Antriebsstrang 9 vorgesehenen Überlastrutschkupplung 10 und der Drehspindel 6 angeordnet. Die serielle Anordnung der über die Detektionseinrichtung 12 automatisch aktivierbaren Sicherheitseinrichtung 11 und der Überlastrutschkupplung 10 im Antriebsstrang 9 für die Drehspindel 6 bietet dem Anwender grösstmöglichen Schutz und verhindert gefährdende Situationen, in denen er von hohen Reaktionsdrehmomenten überrascht werden könnte. Die Detektionseinrichtung 12, die Auswerteeinheit 13, die Vergleichseinheit 14, der Antriebsmotor 8 und die Sicherheitseinrichtung 11 sind über Signalleitungen 15, 16, 17, 18 miteinander verbunden.

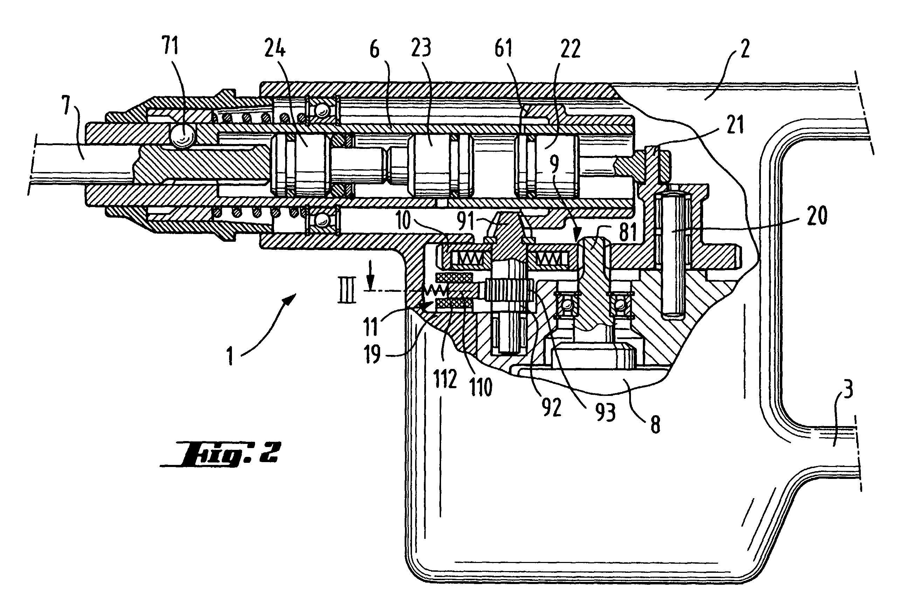

Das in Fig. 2 dargestellte Handgerät 1 ist teilweise geschnitten. Insbesondere handelt es sich um ein Hammer-Bohrgerät, das mit einem Axialschlagwerk ausgestattet ist, welches auf das in eine Werkzeugaufnahme 71 eingesetzte Bohrwerkzeug 7 im Betrieb axiale Schläge ausübt. Die Werkzeugaufnahme 71 ist in axialer Verlängerung der Drehspindel 6 angeordnet und drehfest mit ihr verbunden. Die Drehspindel 6 wird über ein Getriebe 9 vom Antriebsmotor 8 angetrieben. Dazu kämmt die Verzahnung einer Motorwelle 81 mit der Verzahnung der Überlastrutschkupplung 10, deren abtriebsseitiger Teil drehdest mit einer Welle 92 verbunden ist, die in einer dem Gehäuse 2 zugehörigen Abstützplatte 19 gelagert ist und ein Kegelrad 91 trägt. Das Kegelrad 91 greift in die Verzahnung eines drehfest mit der Drehspindel 6 verbundenen Zahnrads 61 ein und überträgt die Drehbewegung der Welle 92 auf die Drehspindel 6.

Die Motorwelle 81 treibt auch eine aufrecht stehende Antriebswelle 20 des Schlagwerks. Ein Zapfen 21 ragt exzentrisch von der Stirnseite der Welle 20 und ist mit einem Erregerkolben 22 des Schlagwerks verbunden, der in der hohlen Drehspindel 6 geführt ist. Indem der Erregerkolben 22 exzentrisch an der Welle 20 angelenkt ist, wird die Rotation der Antriebswelle 20 in eine Hin- und Herbewegung des Erregerkolbens 22 im Inneren der Drehspindel 6 umgewandelt. Der Erregerkolben 22 wirkt mit einem Flugkolben 23 zusammen, der ebenfalls in der Drehspindel 6 axial verschiebbar ist. Ein zwischen dem Erregerkolben 22 und dem Flugkolben 23 angeordnetes Luftpolster verhindert ein Zusammenprallen der beiden Kolben. Der Flugkolben 23 schlägt im Betrieb gegen ein Döpperelement 24, welches in die Wekzeugaufnahme 71 ragt und die axialen Schläge auf das Werkzeug 7 überträgt.

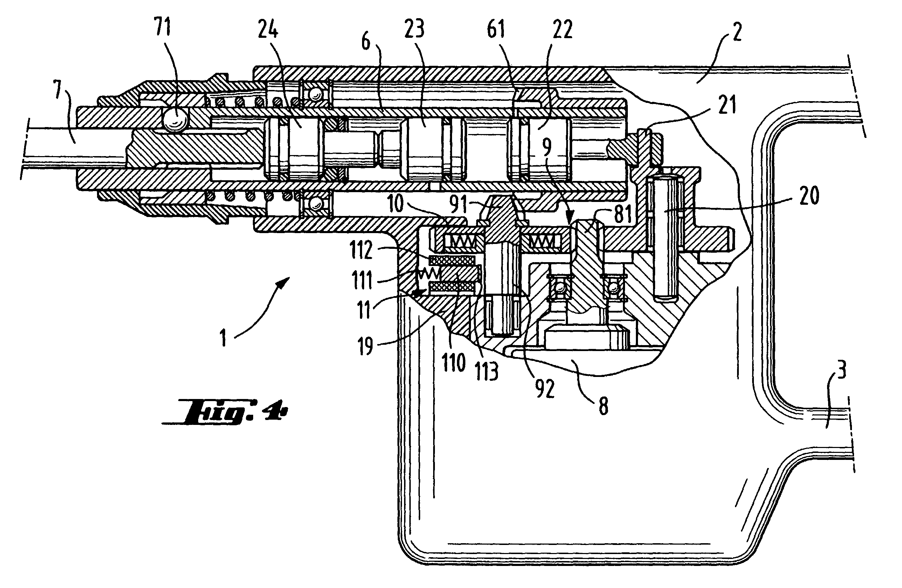

Zur Verhinderung eines plötzlichen Auslenkens des Gehäuses 2 des Handgeräts 1 im Blockierfall des Werkzeugs 7, ist im Antriebsstrang 9 für die Drehspindel 6, zwischen der Überlastrutschkupplung 10 und der Drehspindel 6, die Sicherungseinrichtung 11 angeordnet. Wie in Fig. 3 dargestellt, umfasst die Sicherungseinrichtung 11 ein Schubelement 110, das über eine Feder 111 in Richtung einer an der Welle 92 vorgesehenen Bremsverzahnung 93 vorgespannt ist. Das federbelastete Schubelement 110 ist in einer Magnetspule 112 geführt und axial verschiebbar. Die Magnetspule 112 ist auf einer Abstützplatte 19, die dem Gehäuse 2 zugehörig ist, gehaltert.

Im Normalfall ist das federbelastete Schubelement 110 durch das Magnetfeld der Magnetspule 112 im Abstand von der Bremsverzahnung 93 der Welle gehalten. Im Aktivierungsfall der Sicherheitseinrichtung 11, bei Detektion eines Blockierfalls, wird die Magnetspule 112 durch ein Signal stromlos geschaltet. Dadurch wird das Schubelement 110 von der Feder 111 gegen die Bremsverzahnung 93 der Welle 92 geschoben, bis sein Vorderende zwischen die Zähne derselben gleitet. Auf diese Weise werden das Gehäuse 2 und die Welle 92 durch Formschluss drehfest miteinander gekoppelt. Da ja das Werkzeug 7 blockiert, ist auch die Drehspindel 6 blockiert. Dadurch ist auch das Kegelrad 91 blockiert, das drehfest mit der Welle 92 verbunden ist. Somit ist im Blockierfall eine drehfeste Verbindung zwischen dem Gehäuse 2 und dem blockierten Werkzeug 7 hergestellt. Das Gehäuse 2 kann nicht mehr auslenken. Indem im Blockierfall die gesamte Masse des Handgeräts 1 drehfest mit dem Werkzeug 7 gekoppelt ist, kann das Werkzeug auch wieder losgerissen werden und der Bohrvorgang kann ohne Unterbrechung fortgesetzt werden.

Fig. 4 zeigt ein Handgerät 1 mit einer Variante der Sicherheitseinrichtung 11. Bei dem dargestellten Beispiel umfasst die Sicherheitseinrichtung 11 gleichfalls ein von einer Feder 111 gegen die Welle 92 vorgespanntes Schubelement 110, das im Magnetfeld einer Magnetspule 112 axial verschiebbar ist. An ihrem der Oberfläche der Welle 92 zugewandten Ende ist das Schubelement 110 mit einem Bremsschuh 113 ausgestattet, der einen Bremsbelag aufweist. Im normalen Betriebszustand ist das Schubelement durch das Magnetfeld der Magnetspule 112 im Abstand von der Welle 92 gehalten. Wird ein möglicher Blockierfall detektiert, wird ein Signal erzeugt, welches den Stromkreis zur Magnetspule 112 unterbricht. Dadurch fällt das Magnetfeld der Magnetspule 112 zusammen, und das Schubelement 110 mit dem Bremsschuh 113 wird gegen die Oberfläche der Welle 92 gepresst. Der Bremsbelag des Bremsschuhs 113 weist gegenüber der Oberfläche einen hohen Reibkoeffizienten auf, so dass eine Kopplung des Gehäuses 2 mit der blockierten Welle 92 durch Reibschluss erfolgt. Vorzugsweise ist der Bremsschuh 113 der Krümmung der Welle 92 angepasst. Auch kann vorgesehen sein, den Bremsschuh 113 bzw. dessen Bremsbelag auswechselbar an dem Schubelement 110 anzuordnen.

Die Sicherheitseinrichtung 11 wird über die Detektionseinrichtung 12 aktiviert, welche auch mit dem Antriebsmotor 8 zusammenwirkt. Gleichzeitig mit der Aktivierung der Sicherungseinrichtung 11 wird auch der Antriebsmotor 8 abgeschaltet. Das Restmoment des Antriebsmotors 8 wird von der Überlastrutschkupplung 10 aufgenommen, welche den Antriebsstrang 9 vom Antriebsmotor 8 trennt. Bei erneuter Inbetriebnahme des Handgeräts 1, nach dem Lösen des Werkzeugs 7, wird der ursprüngliche Zustand wieder hergestellt und wird die drehfeste Kopplung zwischen dem Gehäuse 2 und der Welle 92 durch Bestromung der Magnetspule 112 aufgehoben. Daduch ist das Handgerät 1 für einen eventuellen weiteren Blockierfall des Werkzeugs 7 vorbereitet, um dem Anwender grösstmöglichen Schutz zu bieten.

## Patentansprüche

1. Motorisch betriebenes Handgerät, insbesondere Bohrgerät, mit einer aus einem Gehäuse (2) ragenden Drehspindel (6) zur Übertragung einer Drehbewegung von einem Antriebsmotor (8) auf ein Werkzeug (7) und einer Sicherheitseinrichtung (11), die bei plötzlich blockierendem Werkzeug (7) ein Auslenken des Gehäuses (2) des Handgeräts (1) um die Achse (A) der Drehspindel (6) unterbindet, wobei die Sicherheitseinrichtung (11) mittels einer Detektionseinrichtung (12) für den Blockierfall des Werkzeugs (7) aktivierbar ist, wobei im Antriebsstrang (9) für die Drehspindel (6) eine Überlastrutschkupplung (10) vorgesehen ist und die Sicherheitseinrichtung (11) in Serie zur Überlastrutschkupplung (10) im Antriebsstrang (9) zwischen der Überlastrutschkupplung (10) und der Drehspindel (6) angeordnet ist und bei Aktivierung das Gehäuse (2) und den drehspindelseitigen Antriebsstcang (9) drehfest miteinander koppelt, und wobei die Sicherheitseinrichtung (11) im delektierten Blockierfall elektromechanisch aktivierbar ist, **dadurch gekennzeichnet, dass** die Sicherheitseinrichtung (11) ein federbelastetes Schubelement (110) umfasst, das bei ausgeschaltetem Handgerät (1) das Gehäuse (2) und den Antriebsstrang (9) für die Drehspindel (6) drehfest miteinander koppelt.

2. Handgerät nach Anspruch 1, **dadurch gekennzeichnet, dass** das federbelastete Schubelement (110) im Magnetfeld einer Magnetspule (112) angeordnet ist, die im Betrieb bestromt ist und bei Detektion des Blockierfalls stromlos schaltbar ist, wodurch die Sicherheitseinrichtung (11) aktivierbar ist.

3. Handgerät nach einem der vorangehenden Ansprüche, **dadurch gekennzeichnet, dass** die Sicherheitseinrichtung (11) zur Herstellung einer formschlüssigen Verbindung zwischen dem Gehäuse (2) und dem Antriebsstrang (9) ausgebildet ist und wenigstens zwei im Aktiverungsfall miteinander formschlüssig zusammenwirkende Verriegelungselemente (110, 93) umfasst, von denen eines mit dem Gehäuse (2) verbunden ist und das andere dem Antriebsstrang (9) zugehörig ist.

## Claims

1. Motor driven handtool, in particular a drilling tool, comprising a rotary spindle (6) which projects from a housing (2) for transferring of a rotary movement from a drive motor (8) to a tool (7), and a safety device (11) which, in the event of a suddenly jammed tool (7), prevents a deflection of the housing (2) of the handtool (1) around the axis (A) of the rotary spindle (6), and the safety device (11) is activated by means of a detection device (12) in the event of jamming of a tool, and in the drive arrangement (9) for the rotary spindle (6) is provided an overload slip clutch (10), and the safety device (11) is arranged in series with the overload slip clutch (10) in the drive arrangement (9) between the overload slip clutch (10) and the rotary spindle (6), and when activated the housing (2) and the drive arrangement (9) at the side of the rotary spindle are non-rotationally coupled together, and the safety device (11) is in a detected case of jamming electro-mechanically activated, **characterised in that** the safety device (11) includes a springloaded thrust element (10) which non-rotationally couples the housing (2) and the drive arrangement (9) for the rotary spindle (6) when the handtool (1) is switched off.

2. Handtool according to Claim 1, **characterised in that** the springloaded thrust element (110) is arranged in the magnetic field of a magnet coil (112) which is under a current when operational and switched to be without a current when a case of jamming is detected, thereby activating the safety device (11).

3. Handtool according to one of the above claims, **characterised in that** the safety device (11) is designed to establish a positive connection between the housing (2) and the drive arrangement (9) and includes at least two locking elements (110, 93) which positively co-act in the event of being activated and of which one is connected to the housing (2) and the other is associated with the drive arrangement (9).

## Revendications

1. Outil portatif, en particulier outil de forage, actionné par un moteur, comprenant une broche rotative (6) dépassant d'un carter (2) pour transmettre un mouvement de rotation d'un moteur d'entraînement (8) à un outil (7) et un dispositif de sécurité (11) qui, en cas de blocage brutal de l'outil (7), empêche le carter (2) de l'outil portatif de s'écarter de l'axe (A) de la broche rotative (6), le dispositif de sécurité (11) pouvant être activé au moyen d'un dispositif de détection (12) du blocage de l'outil (7), dans la chaîne de transmission (9) de la broche rotative (6) étant prévu un accouplement à friction de surcharge (10), et le dispositif de sécurité (11) étant monté en série par rapport à l'accouplement à friction de surcharge (10) dans la chaîne de transmission (9) entre l'accouplement à friction de surcharge (10) et la broche rotative (6) et, en cas d'activation, solidarisant en rotation le carter (2) et la chaîne de transmission côté broche rotative (9), et le dispositif de sécurité (11) pouvant être activé par voie électromécanique en cas de détection d'un blocage, **caractérisé en ce que** le dispositif de sécurité (11) comprend un élément coulissant à sollicitation élastique (110) qui, lorsque l'outil portatif (1) est déconnecté, solidarise en rotation le carter (2) et la chaîne de transmission (9) pour la broche rotative (6).

2. Outil portatif selon la revendication 1, **caractérisé en ce que** l'élément coulissant à sollicitation élastique (110) est disposé dans le champ magnétique d'une bobine magnétique (112), laquelle est alimentée en courant lors du fonctionnement et, en cas de détection du blocage, est privée de courant, ce qui a pour effet d'activer le dispositif de sécurité (11).

3. Outil portatif selon une des revendications précédentes, **caractérisé en ce que** le dispositif de sécurité (11) est conçu pour établir une liaison par complémentarité de formes entre le carter (2) et la chaîne de transmission (9) et comprend au moins deux éléments de verrouillage (110, 93) qui, en cas d'activation, coopèrent mutuellement par complémentarité de formes et dont un est relié au carter (2) et l'autre fait partie de la chaîne de transmission (9).
